(19) 

**Europäisches Patentamt**
**European Patent Office**
**Office européen des brevets**

(11) **EP 4 379 761 A1**

(12) 

# EUROPEAN PATENT APPLICATION
published in accordance with Art. 153(4) EPC

(43) Date of publication:
**05.06.2024 Bulletin 2024/23**

(21) Application number: **22849669.1**

(22) Date of filing: **25.04.2022**

(51) International Patent Classification (IPC):
**H01G 2/10** (2006.01)        **H01G 11/78** (2013.01)

(52) Cooperative Patent Classification (CPC):
**H01G 2/10; H01G 11/78;** Y02E 60/10

(86) International application number:
**PCT/KR2022/005853**

(87) International publication number:
**WO 2023/008690 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.07.2021  KR 20210098949
08.12.2021  KR 20210174840
08.12.2021  KR 20210174849
09.12.2021  KR 20210175918
09.12.2021  KR 20210175929
13.12.2021  KR 20210177385
24.12.2021  KR 20210186879
13.04.2022  KR 20220045541

(71) Applicant: **LS Materials Co., Ltd.
Gyeonggi-do 14118 (KR)**

(72) Inventors:
• **LEE, Jung Gul
Anyang-si, Gyeonggi-do 14118 (KR)**
• **SON, Sang Woo
Anyang-si, Gyeonggi-do 14118 (KR)**
• **YU, Hyun Jae
Anyang-si, Gyeonggi-do 14118 (KR)**

(74) Representative: **Botti & Ferrari S.p.A.
Via Cappellini, 11
20124 Milano (IT)**

(54) **ENERGY STORAGE DEVICE**

(57) The present invention relates to an energy storage device comprising: a module case in which a plurality of accommodation spaces are formed; a plurality of bare cells which are accommodated in the accommodation spaces respectively; and a cover which is coupled to the module case so as to cover the accommodation spaces, wherein: the module case comes into direct contact with the bare cells accommodated in the respective accommodation spaces to support the bare cells; and for each of the accommodation spaces, a pressure absorption ratio obtained by calculating the ratio of the volume of the bare cell to the volume of the accommodation space is 95% or less.

EP 4 379 761 A1

# FIG. 3

**Description**

[Technical Field]

The present invention relates to an energy storage device for storing energy such as electrical energy.

[Background Art]

Batteries, capacitors, and the like are representative energy storage devices that store electrical energy. Among such capacitors, ultracapacitors (UCs) have high efficiency, semipermanent lifetime, and fast charge/discharge characteristics and thus are marketed as energy storage devices that can compensate for short cycle and surge voltage problems which are weaknesses of secondary batteries.

Due to such advantages, the ultracapacitors are widely used not only as auxiliary power sources for mobile devices such as mobile phones, tablet personnel computers (PCs), and laptop computers, but also as main or auxiliary power sources for electric vehicles, hybrid vehicles, solar cell power supplies, night road pilot lamps, and uninterrupted power supplies (UPSs), and the like which require high capacity.

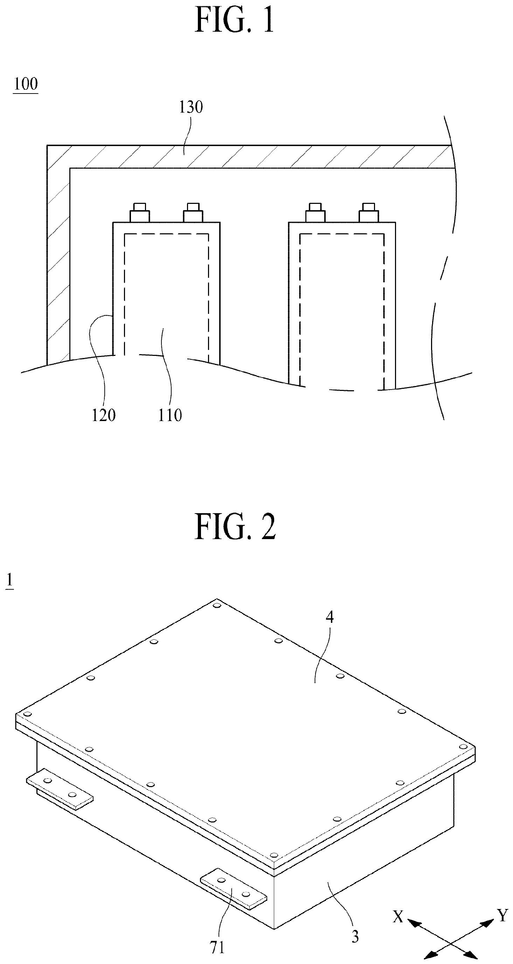

FIG. 1 is a schematic side view of an energy storage device according to a related art.

Referring to FIG. 1, an energy storage device 100 according to the related art includes a plurality of bare cells 110, a plurality of cell cases 120 which each accommodate one of the bare cells 110, and a module case 130 which accommodates the cell cases 120.

The bare cells 110 may each be accommodated in one of the cell cases 120. The cell cases 120 in which the bare cells 110 are accommodated may be accommodated in the module case 130. Accordingly, the energy storage device 100 according to the related art may be modularized in a state in which the bare cells 110 are accommodated in the cell cases 120.

Here, an energy density may increase as the number of bare cells 110 accommodated in the module case 130 increases. However, the energy storage device 100 according to the related art has a problem that it is difficult to increase the energy density because a volume occupied by the cell cases 120 inside the module case 130 acts as a dead space.

[Disclosure]

[Technical Problem]

Therefore, the present invention is designed to solve the problems and is for providing an energy storage device capable of preventing a decrease in energy density due to cell cases in which bare cells are accommodated.

[Technical Solution]

To solve the above problems, the present invention may include the following configurations.

An energy storage device according to the present invention may include a module case in which a plurality of accommodation spaces are formed, a plurality of bare cells each accommodated in one of the accommodation spaces, and a cover coupled to the module case to cover the accommodation spaces. The module case may be in direct contact with the bare cells each accommodated in one of the accommodation spaces to support the bare cells. For each of the accommodation spaces, a pressure absorption ratio, which is calculated as a ratio of a volume of the bare cell to a volume of the accommodation space, may be 95% or less.

[Advantageous Effects]

According to the present invention, the following effects can be achieved.

An energy storage device according to the present invention can be implemented such that a bare cell is supported directly by a module case without a cell case. Thus, according to the present invention, a volume occupied by the cell case inside the module case can be used as a space for accommodating the bare cell. Accordingly, according to the present invention, an energy density can be increased through an increase in volume of the bare cell.

The energy storage device according to the present invention is implemented to have a pressure absorption ratio for securing a space capable of accommodating gas discharged from the bare cell during use. Therefore, according to the present invention, a risk of explosion or the like caused by gas discharged from the bare cell can be reduced, thereby improving the reliability and safety of a product.

The energy storage device according to the present invention is implemented to have a pressure absorption ratio for reducing a risk of explosion or the like caused by gas discharged from the bare cell and also increasing a volume of the bare cell. Therefore, according to the present invention, the reliability and safety of a product can be improved, and also an energy density can be increased through an increase in volume of the bare cell, thereby further improving the performance of the product.

[Description of Drawings]

FIG. 1 is a schematic side view of an energy storage device according to a related art.
FIG. 2 is a schematic perspective view of an energy storage device according to the present invention.
FIG. 3 is a schematic exploded perspective view of the energy storage device according to the present invention.
FIG. 4 is a conceptual view for describing a bare cell in the energy storage device according to the present invention.
FIG. 5 is a conceptual cross-sectional view along line I-I of the energy storage device according to the present invention shown in FIG. 3 for describing a pressure absorption ratio.
FIG. 6 is a schematic exploded cross-sectional view along line I-I of FIG. 3 which illustrates the energy storage device according to the present invention.
FIG. 7 is a schematic bottom perspective view of a cover in the energy storage device according to the present invention.
FIG. 8 is a schematic cross-sectional view along line I-I of FIG. 3 which illustrates the energy storage device according to the present invention.
FIG. 9 is a schematic plan view of a module case in the energy storage device according to the present invention.
FIG. 10 is a schematic enlarged cross-sectional view illustrating portion A of FIG. 8.
FIG. 11 is a schematic partial perspective view for describing a support member in the energy storage device according to the present invention.
FIG. 12 is a schematic cross-sectional view along line II-II of FIG. 11.
FIG. 13 is a schematic cross-sectional view along line III-III of FIG. 12.
FIG. 14 is a schematic plan view of the energy storage device according to the present invention.
FIG. 15 is a conceptual bottom perspective view for describing a connection relationship between bare cells, bus bars, and external terminals in the energy storage device according to the present invention.
FIG. 16 is a schematic bottom perspective view of the bus bar in the energy storage device according to the present invention.
FIG. 17 is a schematic bottom perspective view of the external terminal in the energy storage device according to the present invention.
FIG. 18 is a schematic exploded perspective view for describing a connection relationship between the bare cell and internal terminals in the energy storage device according to the present invention.
FIG. 19 is a conceptual side view for describing a connection relationship between the bare cell, the internal terminal, and the bus bar in the energy storage device according to the present invention.
FIG. 20 is a schematic perspective view of the internal terminal in the energy storage device according to the present invention.
FIG. 21 is a conceptual cross-sectional view along line II-II of FIG. 11 which illustrates a connection relationship between the internal terminal and the bare cell in the energy storage device according to the present invention.

[Best Mode]

Hereinafter, embodiments of an energy storage device according to the present invention will be described in detail with reference to the accompanying drawings.

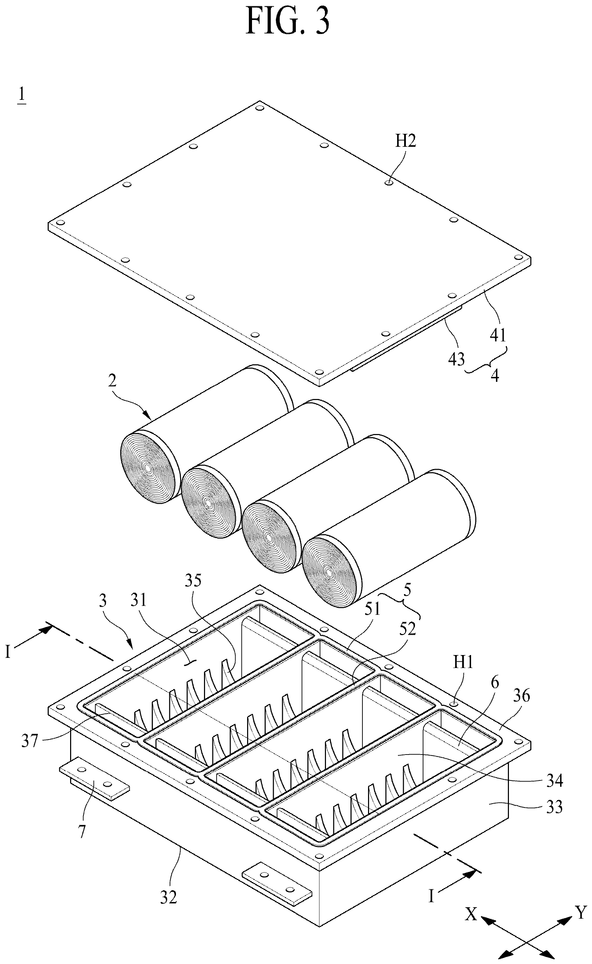

Referring to FIGS. 2 and 3, an energy storage device 1 according to the present invention is for storing electrical energy. The energy storage device 1 according to the present invention may be implemented by modularizing a plurality of ultracapacitors (UCs). The energy storage device 1 according to the present invention may include bare cells 2, a module case 3, and a cover 4.

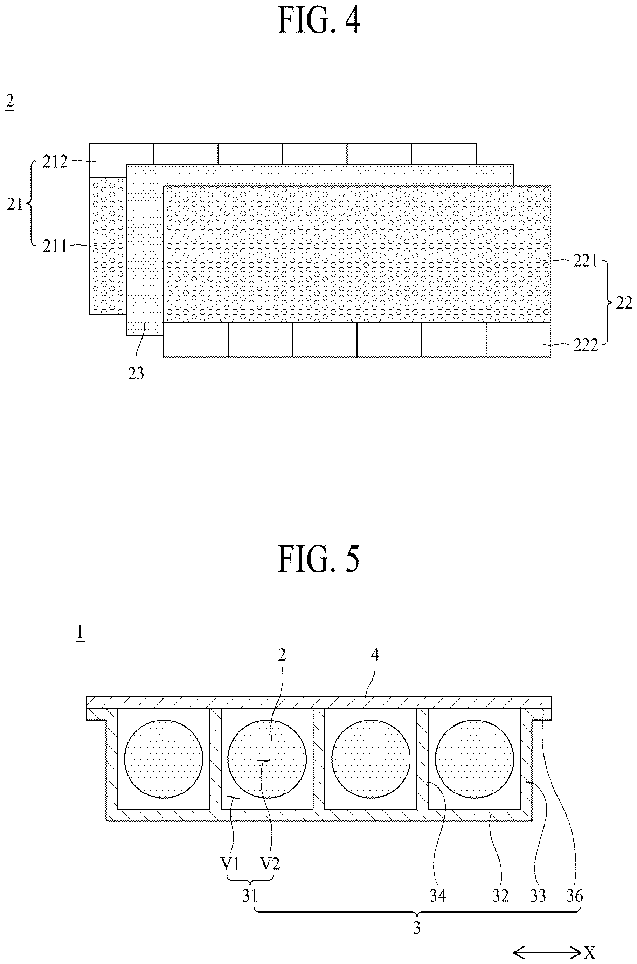

Referring to FIGS. 2 to 4, the bare cell 2 is accommodated in the module case 3. The bare cell 2 may be referred to as an electrode element and may be an ultracapacitor to which a cell case 120 (shown in FIG. 1) is not coupled. The bare cell 2 may be accommodated in the module case 3 without the cell case 120 (shown in FIG. 1). Accordingly, a volume occupied by the cell case 120 (shown in FIG. 1) in the module case 3 may be used as a space for accommodating the bare cell 2, and thus the energy storage device 1 according to the present invention may be implemented such that an energy density can be further increased through an increase in a volume of the bare cell 2.

The bare cell 2 may be formed by winding a first electrode 21, a second electrode 22 having a polarity opposite to that of the first electrode 21, and a separator disposed between the first electrode 21 and the second electrode 22 to electrically separate the first electrode 21 from the second electrode 22. In one embodiment, when the first electrode 21 is a positive electrode, the second electrode 22 is a negative electrode. On the contrary, when the first electrode 21 is the negative electrode, the second electrode 22 is the positive electrode. The bare cell 2 may be wound in the order of the separator 23, the first electrode 21, the separator 23, and the second electrode 22. The bare cell 2 may also be wound in the order of the separator 23, the second electrode 22, the separator 23, and the first electrode 21.

The first electrode 21 may include a first active material layer 211 formed using activated carbon on a current collector (not shown) made of a metal material, and a first electrode lead 212 connected to one side of the first active material layer 211. In this case, the first electrode lead 212 is provided as a region of the current collector in which the first active material layer 211 is not formed.

The second electrode 22 may include a second active material layer 221 formed using activated carbon on a current collector (not shown) made of a metal material, and a second electrode lead 222 connected to one side of the second active material layer 221. In this case, the second electrode lead 222 is provided as a region of the current collector in which the second active material layer 221 is not formed.

In the above-described embodiment, the current collectors constituting the first electrode 21 and the second electrode 22 may be formed using a metal foil. The current collectors serve as movement paths for electric charges emitted from or supplied to the first active material layer 211 and the second active material layer 221. The first active material layer 211 and the second active material layer 221 may be formed to be coated on both surfaces of the current collector. The first active material layer 211 and the second active material layer 221 are portions in which electrical energy is stored.

In one embodiment, the first electrode 21 and the second electrode 22 may be wound such that the first electrode lead 212 is positioned at an upper side of the bare cell 2, and the second electrode lead 222 is positioned at a lower side of the bare cell 2.

Meanwhile, the bare cell 2 may be impregnated with an electrolyte for charging electric energy. In this case, a process of impregnating the bare cell 2 with the electrolyte may be performed by immersing the bare cell 2 in a container filled with the electrolyte for a certain time. The process of impregnating the bare cell 2 with the electrolyte may be performed in a state in which the bare cell 2 is accommodated in the module case 3.

Referring to FIGS. 2 to 4, the module case 3 is for accommodating the bare cell 2. An accommodation space 31 may be formed in the module case 3. The bare cell 2 may be accommodated in the accommodation space 31 and thus accommodated inside the module case 3. The accommodation space 31 may be implemented as a groove formed down to a certain depth from an upper surface of the module case 3. The module case 3 may be in direct contact with the bare cell 2 accommodated in the accommodation space 31 to support the bare cell 2. That is, the bare cell 2 may be supported directly by the module case 3 without the cell case 120 (shown in FIG. 1). Accordingly, the energy storage device 1 according to the present invention may be implemented such that a volume occupied by the cell case 120 (shown in FIG. 1) in the accommodation space 31 may be used for at least one of an empty space and a space for accommodating the bare cell 2. Therefore, the energy storage device 1 according to the present invention is implemented to implement at least one of an increase in volume of an empty space in the accommodation space 31 and an increase in energy density through an increase in volume of the bare cell 2.

A plurality of accommodation spaces 31 may be formed in the module case 3. The accommodation spaces 31 may be spaced apart from each other in a first axial direction (X-axis direction). The bare cells 2 may each be accommodated in one of the accommodation spaces 31 and spaced apart from each other in the first axial direction (X-axis direction). Although four accommodation spaces 31 are illustrated in FIG. 3 as being formed in the module case 3, the present invention is not limited thereto, and two, three, or five or more accommodation spaces 31 may be formed in the module case 3.

Referring to FIGS. 2 to 6, the module case 3 may include a bottom member 32, a sidewall member 33, and a partition member 34.

The bottom member 32 is disposed below the accommodation spaces 31. The bottom member 32 may have supporting force for supporting the bare cells 2 accommodated in the accommodation spaces 31. The entirety of the bottom member 32 may be formed in a quadrangular plate shape, and the bottom member 32 may be disposed to be laid down in a horizontal direction.

The sidewall member 33 protrudes upward from an outer surface of the bottom member 32. The module case 3 may include a plurality of sidewall members 33. The sidewall members 33 may protrude upward from different sides of the bottom member 32. In this case, the accommodation spaces 31 may be disposed inside the sidewall members 33. The entirety of the sidewall member 33 may be formed in a quadrangular plate shape, and the sidewall member 33 may be disposed upright in a vertical direction.

The partition member 34 is for partitioning the accommodation spaces 31. The partition member 34 may protrude upward from the bottom member 32 between the sidewall members 33. Accordingly, the partition member 34 may be disposed between the accommodation spaces 31. In this case, the partition member 34 may be disposed between the accommodation spaces 31 based on the first axial direction (X-axis direction). The module case 3 may include one or more partition members 34. When the number of accommodation spaces 31 is N (N is an integer greater than 1), the module case 3 may include (N-1) partition members 34. When the plurality of partition members 34 are provided, the partition members 34 may be spaced apart from each other in the first axial direction (X-axis direction). The entirety of the partition member 34 may be formed in a quadrangular plate shape, and the partition member 34 may be disposed upright in the vertical direction.

The partition member 34, the sidewall members 33, and the bottom member 32 may be integrally formed. In this case, the partition member 34, the sidewall members 33, and the bottom member 32 may be integrally formed through injection molding.

Referring to FIGS. 2 to 6, the cover 4 is to be coupled to the module case 3. The cover 4 may be coupled to the module case 3 to cover the accommodation spaces 31. Accordingly, the accommodation spaces 31 may be implemented as spaces spatially separated from each other. For each of the accommodation spaces 31 spatially separated due to a coupling between the cover 4 and the module case 3, a pressure absorption ratio, which is calculated as a ratio of a volume V2 of the bare cell 2 to a volume (V1+V2) of the accommodation space 31, may be implemented to be 95% or less. Here, the volume V2 of the bare cell 2 may be a value calculated by multiplying an area of a base side by a height, and a volume V1 may be a volume of a space that becomes empty after the bare cell 2 is accommodated in the accommodation space 31. In this case, the volume (V1+V2) of the accommodation space 31 may be a total volume when the bare cell 2 is not accommodated. The pressure absorption ratio may be calculated through Equation 1 below.

[Equation 1]

$$\text{pressure absorption ratio (\%)} = (\text{volume of bare cell} / \text{volume of accommodation space}) \times 100$$

Since the pressure absorption ratio of each of the accommodation spaces 31 is 95% or less, in the energy storage device 1 according to the present invention, a risk of explosion or the like occurring during use can be reduced to improve the reliability and safety of a product, and an energy density can be increased to improve the performance of the product. This will be described in detail as follows.

First, during use, gas may be discharged from the bare cell 2 accommodated in each of the accommodation spaces 31. In the case of a comparative embodiment in which the pressure absorption ratio of each of the accommodation spaces 31 is implemented to exceed 95%, a risk of occurrence of explosion or the like is high due to the gas discharged from the bare cell 2 accommodated in each of the accommodation spaces 31. Accordingly, the comparative embodiment has a problem that the reliability and safety of a product are lowered.

In order to solve the problem, in the energy storage device 1 according to the present invention, the pressure absorption ratio of each of the accommodation spaces 31 is implemented to be 95% or less, thereby securing a space capable of accommodating gas discharged from the bare cell 2 accommodated in each of the accommodation spaces 31 during use. Therefore, in the energy storage device 1 according to the present invention, a risk of explosion or the like caused by gas discharged from the bare cell 2 accommodated in each of the accommodation spaces 31 can be reduced, thereby further improving the reliability and safety of a product.

Second, the energy storage device 1 according to the present invention is implemented such that the pressure absorption ratio of each of the accommodation spaces 31 can be increased to 95% to reduce a risk of explosion or the like caused gas discharged from the bare cell 2 accommodated in each of the accommodation spaces 31 and the volume V2 of the bare cell 2 accommodated in each of the accommodation spaces 31 also increases. Therefore, in the energy storage device 1 according to the present invention, the reliability and safety of a product can be further improved, and also an energy density can be further increased through an increase in volume V2 of the bare cell 2 accommodated in each of the accommodation spaces 31, thereby further improving the performance of the product.

The pressure absorption ratio of each of the accommodation spaces 31 may be implemented to be 50% or more. In the case of a comparative embodiment in which the pressure absorption ratio of each of the accommodation spaces 31 is implemented to be less than 50%, a space capable of accommodating gas discharged from the bare cell 2 accommodated in each of the accommodation spaces 31 may be increased, but the volume V2 of the bare cell 2 accommodated in each of the accommodation spaces 31 may be excessively reduced. Accordingly, in the comparative embodiment, the performance of a product may be excessively reduced due to a decrease in energy density. On the other hand, in an embodiment, since the pressure absorption ratio of each of the accommodation spaces 31 is implemented to be 50% or more, it is possible to reduce a risk of explosion or the like caused by gas discharged from the bare cell 2 accommodated in each of the accommodation spaces 31 and also implement the volume V2 of the bare cell 2 accommodated in each of the accommodation spaces 31 to not be excessively reduced. Therefore, in the embodiment, the reliability and safety of a product can be improved, and also the performance of the product can be improved through an increase in energy density.

The cover 4 and the module case 3 may be formed of a material such as a material having low conductivity that does not react with an electrolyte impregnated in the bare cells 2. This is to prevent defects such as a short circuit from occurring when the electrolyte leaks from the bare cells 2 because the bare cells 2 are accommodated in the accommodation spaces 31 without the cell case 120 (shown in FIG. 1).

For example, the cover 4 and the module case 3 may be formed of a plastic material. Accordingly, defects such as a short circuit can be prevented from occurring in the cover 4 and the module case 3 even when an electrolyte leaks from the bare cells 2. The cover 4 and the module case 3 may be formed of a plastic material and coupled to each other. In this case, pressure resistance strength for each of the accommodation spaces 31 may be determined by a pressure absorption ratio of each of the accommodation spaces 31. The pressure resistance strength for each of the accommodation spaces 31 may be strength with which the cover 4 and the module case 3 can withstand internal pressure of each of the accommodation spaces 31 without being damaged or broken. When the cover 4 and the module case 3 are formed of aluminum, the pressure resistance strength for each of the accommodation spaces 31 may be implemented to be 15 bar or more, but when the cover 4 and the module case 3 are formed of a plastic material, the pressure resistance strength for each of the accommodation spaces 31 may be implemented to be in a range of about 4 bar to about 8 bar. In this case, the pressure absorption ratio of each of the accommodation spaces 31 may be implemented to may be 50% or more and 95% or less.

The cover 4 and the module case 3 may be coupled through welding using a laser. In this case, the module case 3 may have lower transmittance of the laser than the cover 4. Accordingly, a laser radiated from above the cover 4 may pass through the cover 4 to melt a boundary between the cover 4 and the module case 3, thereby coupling the cover 4 and the module case 3. Therefore, in the energy storage device 1 according to the present invention, the cover 4 and the module case 3 can be firmly coupled through welding, and also the ease of a welding operation can be improved. The cover 4 and the module case 3 are formed of different materials, thereby differently implementing the transmittance of the laser.

The cover 4 and the module case 3 may be formed of the same material. The cover 4 and the module case 3 may be formed using polyamide. The cover 4 and the module case 3 may be formed using at least one selected from ZYTEL, MINLON, DELRIN, CRASTIN, RYNITE, ETPV, and SORONA manufactured by DuPont Company.

Referring to FIGS. 2 to 8, the cover 4 may include a cover member 41 and a plurality of separation members 42.

The cover member 41 is for covering the accommodation spaces 31. When the cover 4 and the module case 3 are coupled, the cover member 41 may be disposed on the module case 3 to cover the accommodation spaces 31. The entirety of the cover member 41 may be formed in a quadrangular plate shape, and the cover member 41 may be disposed to be laid down in the horizontal direction.

The separation members 42 protrude from the cover member 41. When the cover 4 and the module case 3 are coupled, the separation members 42 may be inserted into the accommodation spaces 31. Accordingly, the separation members 42 may support the bare cells 2 such that the bare cells 2 are disposed at positions spaced apart from the cover member 41 in the accommodation spaces 31. Therefore, in the energy storage device 1 according to the present invention, an additional space can be secured between the bare cells 2 and the cover member 41 using the separation members 42. Accordingly, the energy storage device 1 according to the present invention is implemented such that a pressure absorption ratio of each of the accommodation spaces 31 can be easily adjusted by adjusting a height, thickness, or the like of the separation members 42. In addition, the energy storage device 1 according to the present invention is implemented such that, when gravity acts toward the cover 4, such as when the cover 4 is turned over to be disposed below the module case 3, even when an electrolyte leaks from the bare cells 2, the leaked electrolyte can be accommodated using a space between the bare cells 2 and the cover member 41. Therefore, in the energy storage device 1 according to the present invention, a risk of short circuit caused by an electrolyte leaking from the bare cells 2 can be reduced, thereby further improving the reliability and safety of a product.

Each of the separation members 42 may include a separation groove 421 and a separation surface 422.

The bare cell 2 is inserted into the separation groove 421. The separation groove 421 may be implemented as a groove formed to a certain depth in the separation member 42. When the cover 4 and the module case 3 are coupled, a portion of the bare cell 2 accommodated in the accommodation space 31 may be inserted into the separation groove 421.

The separation surface 422 is in contact with the bare cell 2 inserted into the separation groove 421. The separation surface 422 is a surface disposed to face the separation groove 421. The separation surface 422 may be formed to constitute a curved surface corresponding to a circumference of the bare cell 2. Accordingly, the separation surface 422 supports the bare cell 2 inserted into the separation groove 421, thereby restricting a distance by which the bare cell 2 is movable due to vibration or shaking.

The plurality of separation members 42 may be inserted into each of the accommodation spaces 31. In this case, in each of the accommodation spaces 31, the separation members 42 may be spaced apart from each other in a second axial direction (Y-axis direction). The second axial direction (Y-axis direction) and the first axial direction (X-axis direction) are axial directions disposed perpendicular to each other in a plan view. The separation members 42 inserted into each of the accommodation spaces 31 can support different portions of the bare cell 2 to more stably support the bare cell 2.

The cover 4 may include a plurality of connection members 43.

Each of the connection members 43 is coupled to the separation members 42 spaced apart from each other in the second axial direction (Y-axis direction). Accordingly, the separation members 42 connected to each other by the connection members 43 can more firmly support the bare cell 2. Connection members 43 and 43' may be coupled to both sides of the separation members 42 spaced apart from each other in the second axial direction (Y-axis direction). The separation members 42 spaced apart from each other in the second axial direction (Y-axis direction) may be formed integrally with the connection members 43 and 43'. In a process of coupling the cover 4 and the module case 3, the connection members 43 and 43' may be in contact with the sidewall member 33 or the partition member 34 or may be in contact with the partition members 34. Accordingly, the connection members 43 and 43' guide a coupling position between the cover 4 and the module case 3, thereby improving the ease of the coupling between the cover 4 and the module case 3. In addition, the connection members 43 and 43' are inserted into the accommodation space 31 and supported by the module case 3, thereby restricting a relative movement of the cover 4 with respect to the module case 3. Therefore, in the energy storage device 1 according to the present invention, the bare cells 2 can be more stably supported using the connection members 43 and 43'.

Here, the module case 3 may be implemented such that the bare cell 2 is disposed at a position spaced apart from the bottom member 32. To this end, the module case 3 may include a plurality of holding members 35.

The holding members 35 protrude from the bottom member 32. The holding members 35 may protrude upward from the bottom member 32 in each of the accommodation spaces 31. Accordingly, the holding members 35 may support the bare cells 2 such that the bare cells 2 are disposed at positions spaced apart from the bottom member 32 in the accommodation spaces 31. Therefore, in the energy storage device 1 according to the present invention, an additional space can be secured between the bare cells 2 and the bottom member 32 using the holding members 35. Accordingly, the energy storage device 1 according to the present invention is implemented such that a pressure absorption ratio of each of the accommodation spaces 31 can be easily adjusted by adjusting a height, thickness, or the like of the holding members 35. In addition, the energy storage device 1 according to the present invention is implemented such that, when gravity acts toward the bottom member 32, even when an electrolyte leaks from the bare cells 2, the leaked electrolyte can be accommodated using a space between the bare cells 2 and the bottom member 32. Therefore, in the energy storage device 1 according to the present invention, a risk of short circuit caused by an electrolyte leaking from the bare cells 2 can be reduced, thereby further improving the reliability and safety of a product.

Each of the holding members 35 may include a holding groove 351 and a holding surface 352.

The bare cell 2 is inserted into the holding groove 351. The holding groove 351 may be implemented as a groove formed to a certain depth in the holding member 35. A portion of the bare cell 2 accommodated in the accommodation space 31 may be inserted into the holding groove 351.

The holding surface 352 is in contact with the bare cell 2 inserted into the holding groove 351. The holding surface 352 is a surface disposed to face the holding groove 351. The holding surface 352 may be formed to constitute a curved surface corresponding to the circumference of the bare cell 2. Accordingly, the holding surface 352 supports the bare cell 2 inserted into the holding groove 351, thereby restricting a distance by which the bare cell 2 is movable due to vibration or shaking.

The plurality of holding members 35 may be inserted into each of the accommodation spaces 31. In this case, in each of the accommodation spaces 31, the holding members 35 may be spaced apart from each other in the second axial direction (Y-axis direction). Accordingly, the holding members 35 inserted into each of the accommodation spaces 31 can support different portions of the bare cell 2 to more stably support the bare cell 2.

Each of the holding members 35 may be formed to have the same length as the accommodation space 31 based on the first axial direction (X-axis direction). Accordingly, both sides of the holding members 35 may be coupled to the sidewall member 33 and the partition member 34 or may be coupled to the partition members 34. Therefore, the energy storage device 1 according to the present invention is implemented such that, since supporting force of the holding members 35 can be reinforced using the sidewall member 33 and the partition member 34, the bare cells 2 can be more stably supported using the holding members 35.

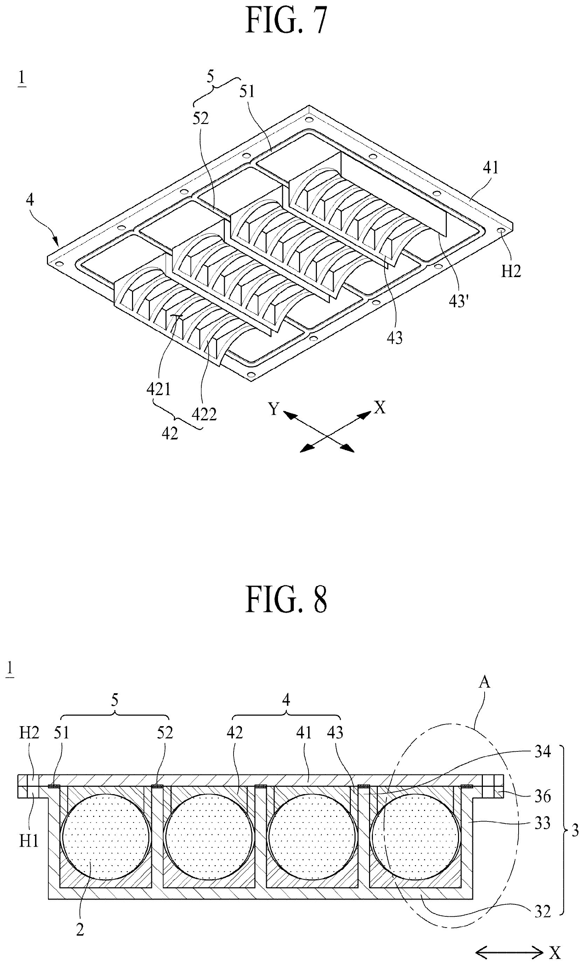

Meanwhile, the energy storage device 1 according to the present invention may include at least one of the holding member 35 and the separation member 42. When both the holding member 35 and the separation member 42 are included, as shown in FIG. 8, in the energy storage device 1 according to the present invention, a support area for supporting the bare cells 2 is increased using the holding member 35 and the separation member 42, thereby more stably supporting the bare cells 2.

Referring to FIGS. 2 to 10, the cover 4 may be coupled to the module case 3 to be in contact with the sidewall members 33 and the partition member 34. The cover 4 may also be in contact with a flange 36 of the module case 3. The flange 36 protrudes outward from upper portions of the sidewall members 33. The flange 36 reinforces strength of the sidewall members 33, thereby preventing the sidewall members 33 from being bent or deformed. For example, when the module case 3 is manufactured through injection molding, the flange 36 can reduce contraction or the like occurring in the sidewall members 33 to prevent the sidewall members 33 from being bent or deformed. As described above, by using the flange 36, the sidewall members 33 can be prevented from being deformed, and thus, in the energy storage device 1 according to the present invention, the cover 4 and the module case 3 can be prevented from deviating a welding path when coupled through welding. Therefore, the welding quality of the cover 4 and the module case 3 can be improved in the energy storage device 1 according to the present invention, thereby further increasing the pressure resistance strength for each of the accommodation spaces 31. Accordingly, even when the cover 4 and the module case 3 are formed of a plastic material, the energy storage device 1 according to the present invention can be implemented to have sufficient pressure resistance strength as well as sufficient durability. In addition, in the energy storage device 1 according to the present invention, the welding quality of the cover 4 and the module case 3 is improved, thereby increasing a blocking force to block an electrolyte, which leaks from some of the accommodation spaces 31, from flowing to other accommodation spaces 31. Therefore, in the energy storage device 1 according to the present invention, a risk of short circuit caused by the leakage of the electrolyte can be reduced, thereby improving the reliability and safety of a product.

When the sidewall members 33 are connected to each other to form a rectangular parallelepiped shape, the flange 36 may protrude outward from the sidewall members 33 to form a quadrangular ring shape. Portions of the flange 36 (hereinafter referred to as "first flange portions) coupled to the sidewall members 33 (hereinafter referred to as "first sidewall members") spaced apart from each other in the first axial direction (X-axis direction) may be formed to be wider than portions of the flange 36 (hereinafter referred to as "second flange portions") coupled to the sidewall members 33 (hereinafter referred to as "second sidewall members") spaced apart from each other in the second axial direction (Y-axis direction). A width of the second flange portion may be a length of the second flange portions protruding from the second sidewall members based on the second axial direction (Y-axis direction). A width of the first flange portion may be a length of the first flange portions protruding from the first sidewall members based on the first axial direction (X-axis direction). Since the second sidewall members are connected to each other by the partition member 34 to thus have greater strength than the first sidewall members, even when the second flange portions are formed to be narrower than the first flange portions, the second sidewall members may have sufficient strength. Therefore, the energy storage device 1 according to the present invention is implemented such that material costs for implementing the flange 36 can be reduced, and sufficient strength for the sidewall members 33 can be secured using the flange 36.

A fastening hole H2 may be formed in the cover 4. In this case, a fastening hole H1 may also be formed in the flange 36. A fastening member (not shown) such as a bolt may be fastened to the fastening holes H1 and H2. Accordingly, the cover 4 and the module case 3 are more firmly coupled through the fastening member, thereby further increasing pressure resistance strength for each of the accommodation spaces 31. A plurality of fastening holes H2 may be formed in the cover 4. The fastening holes H2 may be formed to pass through the cover member 41 at positions spaced apart from each other. A plurality of fastening holes H1 may be formed in the flange 36. The fastening holes H1 may be formed to pass through the flange 36 at positions spaced apart from each other. The fastening holes H1 and H2 may be formed at positions corresponding to each other.

Referring to FIGS. 2 to 10, the energy storage device 1 according to the present invention may include a welding joint 5.

The welding joint 5 couples the module case 3 and the cover 4. The welding joint 5 may be disposed between the module case 3 and the cover 4. In a state in which the module case 3 and the cover 4 are in contact with each other, the welding joint 5 may be melted through welding to couple the module case 3 and the cover 4. The welding joint 5 may be formed to protrude from any one of the module case 3 and the cover 4. The welding joint 5 may be formed to protrude from each of the module case 3 and the cover 4. The welding joint 5 may be formed of the same material as the module case 3 or the same material as the cover 4.

The welding joint 5 may include a sidewall coupling member 51.

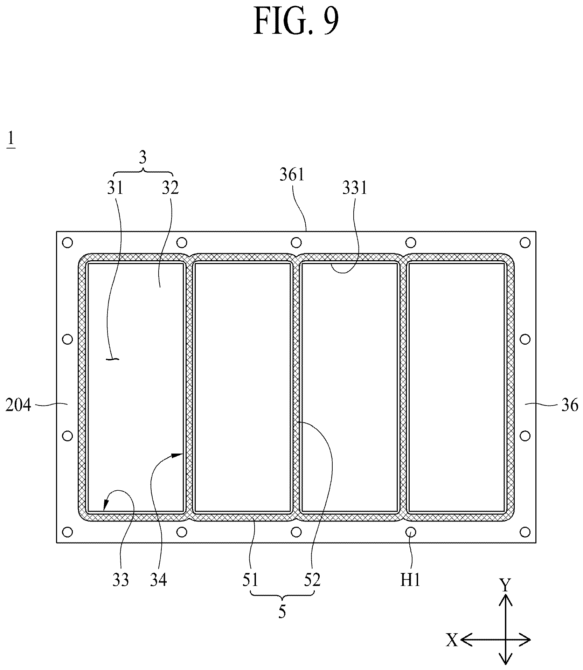

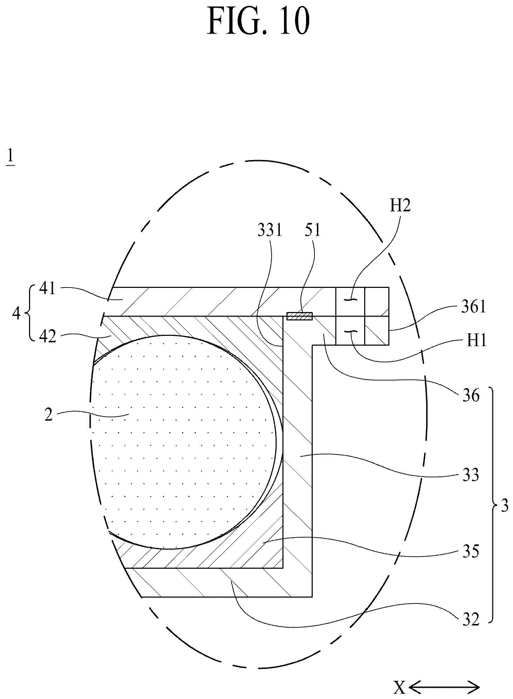

The sidewall coupling member 51 couples the sidewall members 33 and the cover 4. As shown in FIG. 9, the sidewall coupling member 51 may be formed on upper surfaces of the sidewall members 33. As shown in FIG. 10, the sidewall coupling member 51 may be formed on a lower surface of the cover member 41 corresponding to the upper surfaces of the sidewall members 33. The sidewall coupling member 51 may be formed in a closed ring shape along the sidewall members 33.

The sidewall coupling member 51 may couple the upper surfaces of the sidewall members 33 and the lower surface of the cover 4 at a position closer to inner surfaces 331 of the sidewall members 33 than an outer surface 361 of the flange 36. Accordingly, in the energy storage device 1 according to the present invention, it is possible to further increase pressure resistance strength for each of the accommodation spaces 31. This will be described in detail as follows.

First, when gas is discharged from the bare cells 2 accommodated in the accommodation spaces 31 during use, internal pressure caused by the corresponding gas generates intensive stress at a boundary between the cover 4 and the inner surfaces 331 of the sidewall members 33. Accordingly, in the case of a comparative embodiment in which the sidewall coupling member 51 is positioned closer to the outer surface 361 of the flange 36 than the inner surfaces 331 of the sidewall members 33, since it is difficult to withstand stress concentrated on the boundary, pressure resistance strength for each of the accommodation spaces 31 is inevitably lowered.

Next, in the case of an embodiment in which the sidewall coupling member 51 is positioned closer to the inner surfaces 331 of the sidewall members 33 than the outer surface 361 of the flange 36, the sidewall coupling member 51 may couple the upper surfaces of the sidewall members 33 and the lower surface of the cover 4 at a position closer to the boundary. Accordingly, in the embodiment, durability to withstand the stress concentrated on the boundary can be increased, thereby further increasing pressure resistance strength for each of the accommodation spaces 31.

The sidewall coupling member 51 may be disposed inside the fastening hole H1 formed in the flange 36. That is, the fastening hole H1 may be disposed outside the sidewall coupling member 51. Accordingly, in the energy storage device 1 according to the present invention, since the sidewall coupling member 51 and the coupling member fastened to the fastening hole H1 are implemented to couple the cover 4 and the module case 3 without affecting each other, it is possible to further increase pressure resistance strength for each of the accommodation spaces 31. Although not shown, the sidewall coupling member 51 may be formed on all of the upper surfaces of the sidewall members 33 and an upper surface of the flange 36.

The welding joint 5 may include a partition coupling member 52.

The partition coupling member52 couples the partition member 34 and the cover 4. As shown in FIG. 9, the partition coupling member 52 may be formed on an upper surface of the partition member 34. As shown in FIG. 10, the partition coupling member 52 may be formed on the lower surface of the cover member 41 corresponding to the upper surface of the partition member 34. Since the partition coupling member 52 is implemented to couple the partition member 34 and the cover 4, and also, the sidewall coupling member 51 is implemented to couple the sidewall members 33 and the cover 4, in the energy storage device 1 according to the present invention, it is possible to reinforce a coupling force between the module case 3 and the cover 4. Accordingly, in the energy storage device 1 according to the present invention, it is possible to further increase pressure resistance strength for each of the accommodation spaces 31. When the module case 3 includes the plurality of partition members 34, the welding joint 5 may include a plurality of partition coupling members 52. In this case, the partition coupling members 52 may be disposed at positions corresponding to the partition members 34.

As shown in FIG. 9, the partition coupling member 52 and the sidewall coupling member 51 may be connected to each other to form a closed loop for each of the accommodation spaces 31. Therefore, in the energy storage device 1 according to the present invention, the accommodation spaces 31 may be individually sealed using the welding joint 5. Accordingly, in the energy storage device 1 according to the present invention, it is possible to improve airtightness of each of the accommodation spaces 31. In addition, when an electrolyte leaks from the bare cell 2 in some of the accommodation spaces 31, the welding joint 5 may block the leaked electrolyte from flowing into other accommodation spaces 31. Therefore, in the energy storage device 1 according to the present invention, since the leaked electrolyte gathers in some of the accommodation spaces 31, a risk of short circuit or the like occurring can be reduced, thereby further improving the reliability and safety of a product.

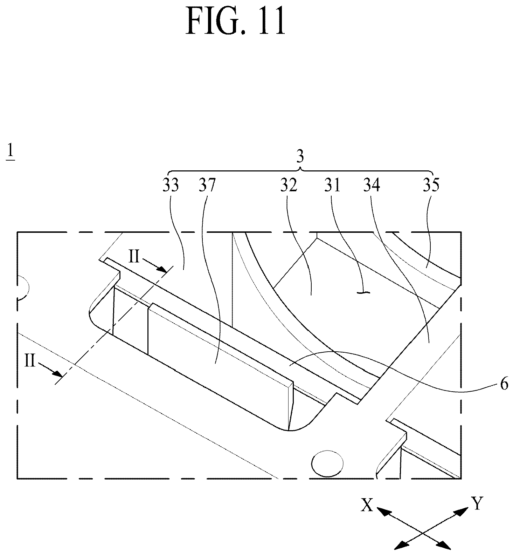

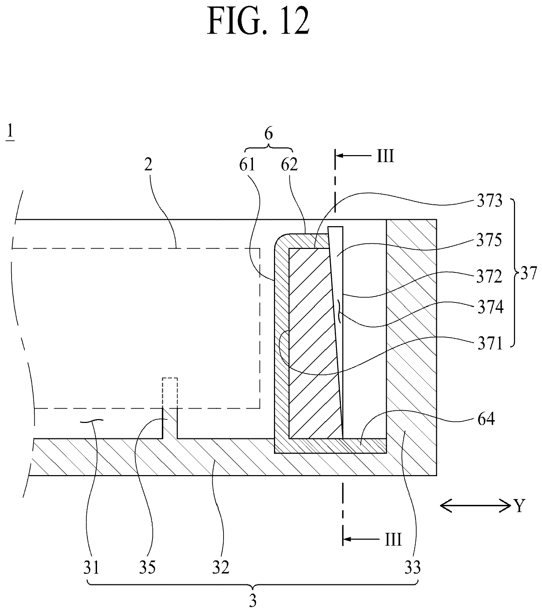

Referring to FIGS. 2 to 13, the energy storage device 1 according to the present invention may include a plurality of bus bars 6.

Each of the bus bars 6 electrically connects at least two bare cells 2 among the bare cells 2. When the bare cells 2 are connected in series, each of the bus bars 6 may electrically connect the two bare cells 2. In this case, each of the bus bars 6 is inserted into one partition member 34 and disposed in the two accommodation spaces 31, thereby being electrically connected to the two bare cells 2. When the bare cells 2 are connected in parallel, all of the bare cells 2 accommodated in the module case 3 may be electrically connected. In this case, the bus bars 6 are inserted into all the partition members 34 of the module case 3 and disposed in all the accommodation spaces 31, thereby being electrically connected to all of the bare cells 2. The bus bars 6 may be coupled to the module case 3 through insert molding. Meanwhile, both ends of the bare cells 2 accommodated in the accommodation spaces 31 may be electrically connected to the bus bars 6. The bus bars 6 may be formed of a material having conductivity.

The bus bars 6 may be electrically connected to the bare cells 2 in the accommodation spaces 31. In this case, the module case 3 may include a plurality of support members 37.

The support members 37 support the bus bars 6. The support members 37 may protrude upward from the bottom member 32 in each of the accommodation spaces 31. The bus bars 6 can be coupled to and firmly supported by the support members 37 in the accommodation spaces 31 and thus can be stably maintained in a state of being electrically connected to the bare cells 2. Two support members 37 spaced apart from each other in the second axial direction (Y-axis direction) may be disposed in each of the accommodation spaces 31. In this case, the bus bar 6 may be coupled to each of the two support members 37.

Each of the support members 37 may be formed to have the same length as the accommodation space 31 based on the first axial direction (X-axis direction). Accordingly, both sides of each of the support members 37 may be coupled to the sidewall member 33 and the partition member 34 or may be coupled to the partition members 34. Therefore, the energy storage device 1 according to the present invention is implemented such that, since supporting force of the support members 37 can be reinforced using the sidewall member 33 and the partition member 34, the bus bars 6 can be more stably supported using the support members 37.

Each of the support members 37 may include an inner support surface 371, an outer support surface 372, and an upper support surface 373.

The inner support surface 371 is disposed to face the bare cell 2 accommodated in the accommodation space 31. The inner support surface 371 may be formed to constitute a flat surface parallel to the vertical direction. The bus bar 6 may be disposed between the bare cell 2 and the inner support surface 371.

The outer support surface 372 is disposed to face the sidewall member 33. The outer support surface 372 may be disposed at a position spaced apart from the sidewall member 33. Accordingly, a separation space may be provided between the outer support surface 372 and the sidewall member 33 based on the second axial direction (Y-axis direction). When a coupling operation of coupling the bus bar 6 to the support member 37 through insert molding or hybrid injection is performed, a movement prevention member (not shown) for preventing movement of the bus bar 6 may be inserted into the separation space. The movement prevention member may correspond to a part of a mold of an injection molding machine. Accordingly, in the energy storage device 1 according to the present invention, the separation space is used, thereby improving the ease of a coupling operation of coupling the bus bar 6 to the support member 37 and also coupling the bus bar 6 to the support member 37 at an accurate position. In addition, in the energy storage device 1 according to the present invention, it is possible to prevent the bus bar 6 from being partially covered with burrs. When the bus bar 6 is covered with burrs, contact resistance increases. Thus, in the energy storage device 1 according to the present invention, the bus bar 6 is prevented from being covered with burrs so that the bus bar 6 can reduce contact resistance between the bare cells 2. Therefore, in the energy storage device 1 according to the present invention, it is possible to improve electrical connectivity between the bus bar 6 and the bare cell 2. The bus bar 6 and the support member 37 may be coupled through insert molding.

The upper support surface 373 is connected to each of the inner support surface 371 and the outer support surface 372. When the cover 4 and the module case 3 are coupled, the upper support surface 373 is a surface disposed to face the cover 4. The upper support surface 373 may support an upper portion of the bus bar 6. Accordingly, the support member 37 can more firmly support the bus bar 6 using the upper support surface 373.

Each of the support members 37 may include a support groove 374.

The support groove 374 is formed on the outer support surface 372. The support groove 374 may be implemented as a groove formed to a certain depth in the outer support surface 372. Since a volume of the separation space is increased due to the support groove 374, in the energy storage device 1 according to the present invention, a contact area between the movement prevention member and the bus bar 6 is increased, thereby further reinforcing a prevention force for preventing the movement of the bus bar 6. Therefore, in the energy storage device 1 according to the present invention, it is possible to further improve the ease and accuracy of a coupling operation of coupling the bus bar 6 to the support member 37 and further improve connectivity between the bus bar 6 and the bare cell 2.

The support groove 374 may be formed such that a size thereof is gradually increased as the support groove extends upward. Accordingly, a portion of the support member 37 on which the support groove 374 is formed may be implemented to protrude upward such that a thickness thereof based on the second axis direction (Y-axis direction) is gradually decreased. Therefore, the energy storage device 1 according to the present invention is implemented such that an inlet area of the separation space is increased, thereby allowing the movement prevention member to be easily inserted into the separation space and allowing the movement prevention member to be easily separated from the separation space.

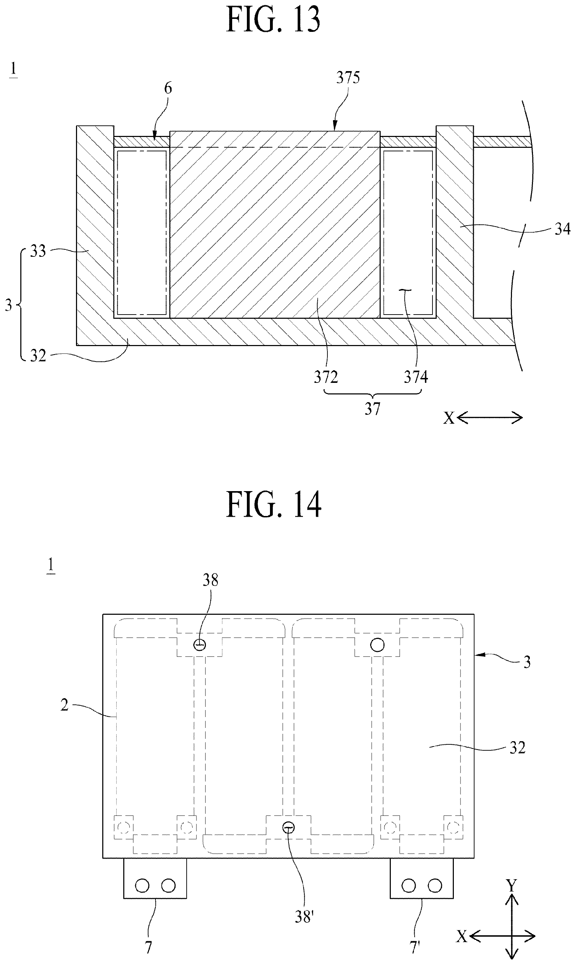

As shown in FIG. 13, the support groove 374 may be formed at each of both sides of a support body 375 based on the first axial direction (X-axis direction). The support body 375 may be a portion of the outer support surface 372 on which the support groove 374 is not formed. When the movement prevention member is inserted into the support groove 374, both side surfaces of the support body 375 may guide the movement of the movement prevention member. The support body 375 may be formed to be higher than the portion on which the support groove 374 is formed. In this case, the support body 375 may support a portion of an upper protrusion member 62. The support body 375 may be formed to be higher than the portion on which the support groove 374 is formed and also have a height less than the sidewall members 33. Accordingly, in the energy storage device 1 according to the present invention, when the cover 4 and the module case 3 are coupled through welding, it is possible to reduce a degree in which the support body 375 interferes with a welding operation. Therefore, in the energy storage device 1 according to the present invention, even when the support body 375 is provided, it is possible to improve the ease and accuracy of a welding operation of coupling the cover 4 and the module case 3 through welding.

Although not shown, the support groove 374 may also be formed at one side of the support body 375 or the other side of the support body 375 based on the first axial direction (X-axis direction). The support groove 374 may also be formed on the entire surface of the outer support surface 372.

Each of the bus bars 6 may include a bus bar body 61 and the upper protrusion member 62.

The bus bar body 61 is in contact with the inner support surface 371. The bus bar body 61 may be disposed between the bare cell 2 accommodated in the accommodation space 31 and the support member 37. The bus bar body 61 may be electrically connected to the bare cell 2 accommodated in the accommodation space 31. The bus bar body 61 may be disposed upright in the vertical direction.

The upper protrusion member 62 protrudes from the bus bar body 61. The upper protrusion member 62 may be in contact with the upper support surface 373 and supported by the support member 37. Accordingly, the bus bar 6 may be more firmly supported by the support member 37 and thus can be more stably maintained in a state of being electrically connected to the bare cells 2. The upper protrusion member 62 may protrude toward the support member 37 from the upper portion of the bus bar body 61. The upper protrusion member 62 and the bus bar body 61 may be integrally formed.

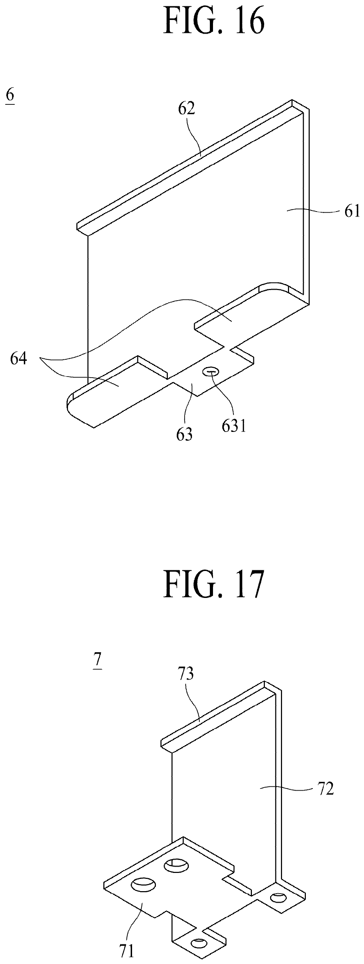

Referring to FIGS. 2 to 17, each of the bus bars 6 may include a detection member 63.

The detection member 63 protrudes from the bus bar body 61. When the bus bar body 61 is disposed between the bare cell 2 accommodated in the accommodation space 31 and the sidewall member 33, the detection member 63 may protrude from the bus bar body 61 toward the bare cell 2 accommodated in the accommodation space 31. When the upper protrusion member 62 is provided, the detection member 63 and the upper protrusion member 62 may protrude in opposite directions with respect to each other. The detection member 63 may protrude from a lower portion of the bus bar body 61. The detection member 63 and the bus bar body 61 may be integrally formed.

When the detection member 63 is provided, the module case 3 may include a detection hole 38. The detection hole 38 may be formed to pass through the bottom member 32. Thus, the energy storage device 1 according to the present invention is implemented such that, without a separation of the bare cells 2 accommodated in the module case 3, an electrical connection is allowed to the detection member 63 through the detection hole 38 outside the module case 3. Accordingly, in the energy storage device 1 according to the present invention, without a separation of the bare cells 2 accommodated in the module case 3, it is possible to perform a monitoring operation of monitoring a voltage of the bare cells 2, a balancing operation of adjusting the voltage of the bare cells 2, and the like. Therefore, in the energy storage device 1 according to the present invention, it is possible to improve the ease of the monitoring operation and the balancing operation and reduce a time required for the monitoring operation and the balancing operation. The detection hole 38 may be formed to pass through the bottom member 32 at a position corresponding to the detection member 63. A plurality of detection holes 38 may be formed in the module case 3.

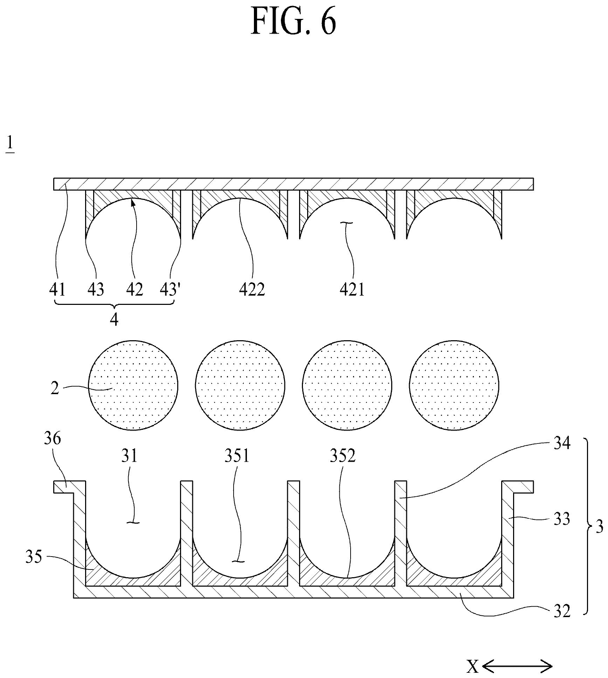

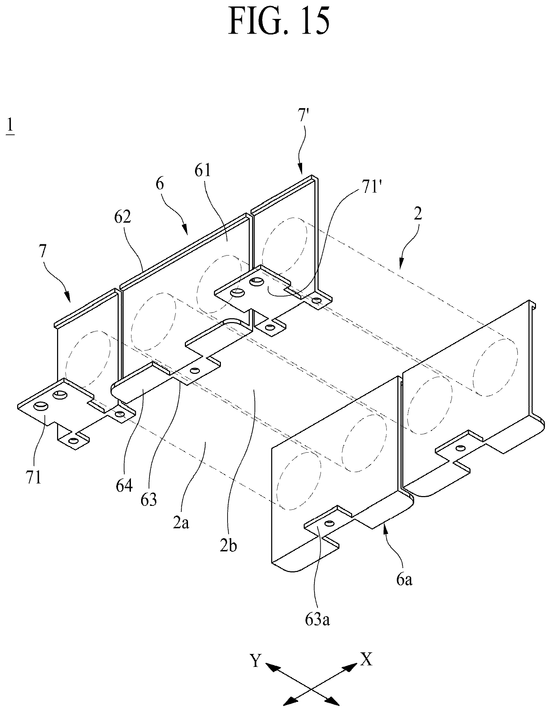

The detection member 63 may be disposed between the bare cells 2 based on the first axial direction (X-axis direction). Accordingly, the detection member 63 may be disposed at a position that does not interfere with electrical connection between the bus bar 6 and the bare cells 2. For example, as shown in FIG. 15, when a first bus bar 6a among the bus bars 6 is electrically connects to a first bare cell 2a and a second bare cell 2b among the bare cells 2, a first detection member 63a of the first bus bar 6a may be disposed between the first bare cell 2a and the second bare cell 2b based on the first axial direction (X-axis direction). In this case, the first bare cell 2a and the second bare cell 2b may be spaced apart from each other in the first axial direction (X-axis direction) and accommodated in different accommodation spaces 31, respectively (shown in FIG. 6). The first detection member 63a may protrude toward the partition member 34 (shown in FIG. 6) disposed between the first bare cell 2a and the second bare cell 2b.

Meanwhile, when each of the bus bars 6 is electrically connected to two bare cells 2 to connect the bare cells 2 in series, based on the second axial direction (Y-axis direction), the detection members 63 (hereinafter referred to as "first detection members") of the bus bars 6 disposed at one sides of the bare cells 2 may be disposed to be misaligned with the detection members 63 (hereinafter referred to as "second detection members") of the bus bars 6 disposed at the other sides of the bare cells 2. In this case, based on the first axial direction (X-axis direction), the first detection member and the second detection member may be disposed at positions spaced apart from each other. Accordingly, as shown in FIG. 14, the detection hole 38 corresponding to the first detection member and a detection hole 38' corresponding to the second detection member may be disposed to be spaced apart from and misaligned with each other based on the first axial direction (X-axis direction).

Each of the bus bars 6 may include an insertion hole 631.

The insertion hole 631 is formed to pass through the detection member 63. The bus bar 6 may be coupled to the module case 3 such that the insertion hole 631 is disposed at a position corresponding to the detection hole 38. Accordingly, the energy storage device 1 according to the present invention is implemented such that the detection member 63 may be electrically connected through the detection hole 38 and the insertion hole 631 outside the module case 3 and the bare cell 2 accommodated in the module case 3 may also be electrically connected through the detection member 63. A screw thread may be formed on an inner surface of the detection member 63 in which the insertion hole 631 is formed. In this case, a detection device (not shown) for performing the monitoring operation and the balancing operation may be inserted into the insertion hole 631 and fastened to the detection member 63. Therefore, in the energy storage device according to the present invention, the detection device and the detection member 63 can be firmly maintained in an electrically connected state, thereby improving the stability of the monitoring operation and the balancing operation.

Each of the bus bars 6 may include a lower protrusion member 64.

The lower protrusion member 64 protrudes from the bus bar body 61. When the bus bar body 61 is disposed between the bare cell 2 accommodated in the accommodation space 31 and the support member 37, the lower protrusion member 64 may protrude toward the support member 37. In this case, the lower protrusion member 64 may be inserted into and coupled to the bottom member 32 so as to be disposed below the support member 37. Accordingly, since the lower protrusion member 64 is firmly supported by the bottom member 32, the bus bar 6 can be more stably maintained in a state of being electrically connected to the bare cells 2. When the detection member 63 is provided, the lower protrusion member 64 and the detection member 63 may protrude in opposite directions with respect to each other based on the second axial direction (Y-axis direction). Accordingly, the lower protrusion member 64 may be disposed at a position that does not interfere with the monitoring operation and the balancing operation using the detection member 63. The lower protrusion member 64 may protrude from the lower portion of the bus bar body 61. The lower protrusion member 64 and the bus bar body 61 may be integrally formed.

Referring to FIGS. 2 to 17, the energy storage device 1 according to the present invention may include an external terminal 7.

The external terminal 7 is electrically connected to at least one of the bare cells 2. The external terminal 7 may be formed of a material having conductivity. One side of the external terminal 7 may be connected to at least one of the bare cells 2 in the module case 3, and the other side of the external terminal 7 may be disposed outside the module case 3. The other side of the external terminal 7 may be electrically connected to an external device (not shown) outside the module case 3. The external device performs a certain operation on the bare cells 2 through the external terminal 7. For example, the external device may be a management device that manages power. The external device may be the detection device. The external terminal 7 may be coupled to the module case 3 through insert molding.

As shown in FIG. 15, the external terminal 7 may be electrically connected to the first bare cell 2a among the bare cells 2. One side of the first bare cell 2a may be electrically connected to the first bus bar 6a, and the other side thereof may be electrically connected to the external terminal 7. The energy storage device 1 according to the present invention may include a plurality of external terminals 7. In this case, external terminals 7 and 7' may be electrically connected to different bare cells 2, respectively. Each of the external terminals 7 and 7' may be electrically connected to the bare cells 2 disposed at both ends thereof based on the first axial direction (X-axis direction).

The external terminal 7 may include a lead member 71.

The lead member 71 protrudes to the outside of the module case 3. The lead member 71 may be electrically connected to the external device outside the module case 3. Accordingly, in the energy storage device 1 according to the present invention, by using the lead member 71, it is possible to improve the ease of an operation of electrically connecting the external device and the bare cells 2 accommodated in the module case 3. Meanwhile, when an even number of accommodation spaces 31 are formed in the module case 3 to accommodate an even number of bare cells 2, lead members 71 and 71' (shown in FIG. 15) of the external terminals 7 and 7' may protrude to the outside of the module case 3 in the same direction based on the second axis direction (Y axis direction). When an odd number of accommodation spaces 31 are formed in the module case 3 to accommodate an odd number of bare cells 2, the lead members 71 and 71' of the external terminals 7 and 7' may protrude to the outside of the module case 3 in opposite directions with respect to each other based on the second axis direction (Y-axis direction).

The external terminal 7 may be disposed in parallel with the bus bars 6 in the first axis direction (X-axis direction). The external terminal 7 may be supported by the support member 37. In this case, the external terminal 7 may include an external terminal body 72 and a protrusion member 73.

The external terminal body 72 is in contact with the inner support surface 371. The external terminal body 72 may be disposed between the bare cell 2 accommodated in the accommodation space 31 and the support member 37. The external terminal body 72 may be electrically connected to the bare cell 2 accommodated in the accommodation space 31. The external terminal body 72 may be disposed upright in the vertical direction. The lead member 71 may be coupled to the external terminal body 72. The lead member 71 may protrude toward the support member 37 from a lower portion of the external terminal body 72. The lead member 71 may be inserted into the support member 37 and the sidewall member 33 to protrude to the outside of the module case 3. The external terminal body 72 and the lead member 71 may be integrally formed. The lead member 71 may be disposed to be laid down in the horizontal direction.

The protrusion member 73 protrudes from the external terminal body 72. The protrusion member 73 may be in contact with the upper support surface 373 to be supported by the support member 37. Accordingly, the external terminal 7 may be more firmly supported by the support member 37 and thus can be more stably maintained in a state of being electrically connected to the bare cells 2. The protrusion member 73 may protrude toward the support member 37 from an upper portion of the external terminal body 72. The protrusion member 73 and the external terminal body 72 may be integrally formed. The protrusion member 73 may be disposed to be laid down in the horizontal direction.

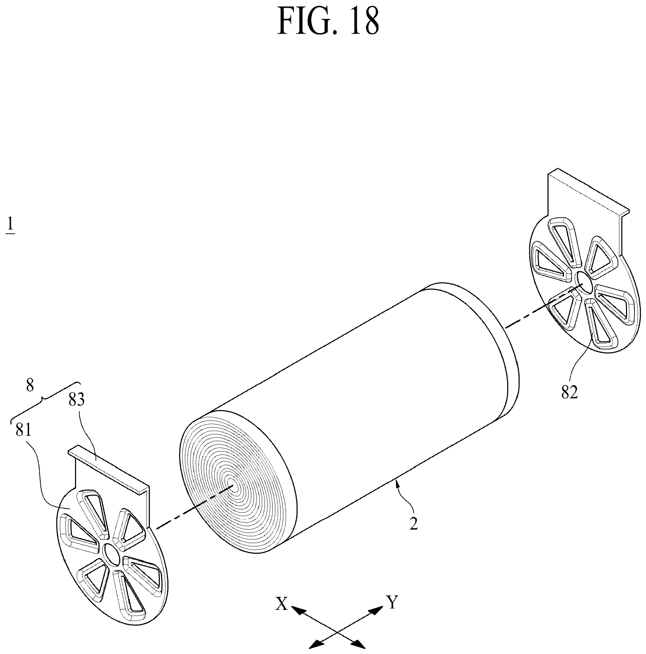

Referring to FIGS. 2 to 21, the energy storage device 1 according to the present invention may include a plurality of internal terminals 8.

The internal terminals 8 are connected to each of the bare cells 2. The internal terminals 8 may be connected to the bus bars 6. Among the bare cells 2, in the case of the bare cell 2 in which both sides thereof are electrically connected to different bus bars 6, the internal terminal 8 connected to one side of the corresponding bare cell 2 and the internal terminal 8 connected to the other side of the corresponding bare cell 2 may be connected to different bus bars 6. Among the bare cells 2, in the case of the bare cell 2 in which one side thereof is electrically connected to the bus bar 6 and the other side thereof is electrically connected to the external terminal 7, the internal terminal 8 connected to one side of the corresponding bare cell 2 may be connected to the bus bar 6, and the internal terminal 8 connected to the other side of the corresponding bare cell 2 may be connected to the external terminal 7. The internal terminals 8 may be formed of a material having conductivity.

Each of the internal terminals 8 may include an internal terminal body 81.

The internal terminal body 81 is disposed between the bare cell 2 and the bus bar 6. The internal terminal body 81 may be connected to each of the bare cell 2 and the bus bar 6 to electrically connect the bare cell 2 and the bus bar 6. An inner surface of the internal terminal body 81 may be connected to the first electrode lead 212 or the second electrode lead 222 of the bare cell 2. An outer surface of the internal terminal body 81 may be connected to the bus bar body 61 of the bus bar 6.

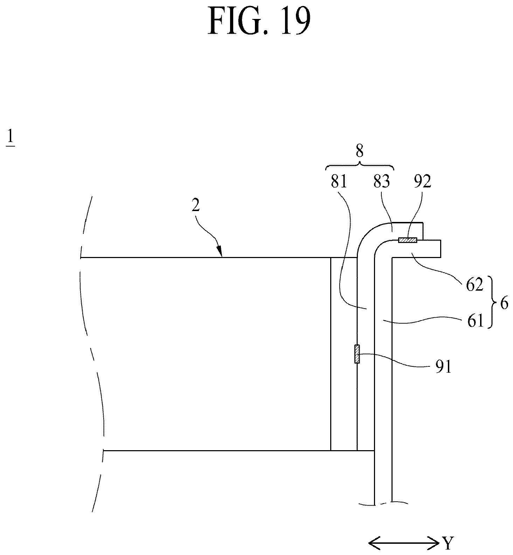

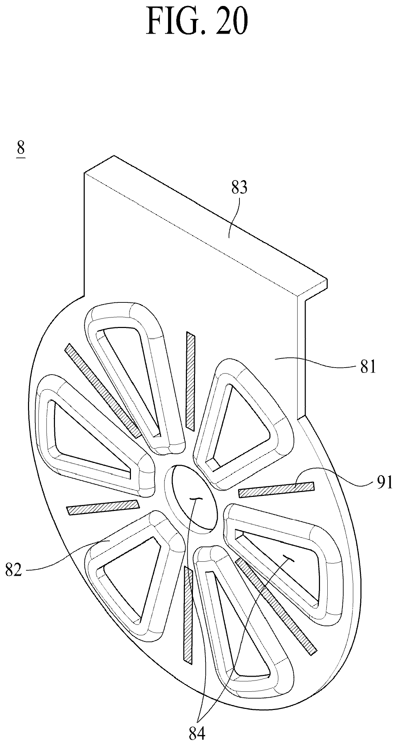

The inner surface of the internal terminal body 81 and the bare cell 2 may be coupled through a plurality of body welding portions 91 (shown in FIGS. 19 and 20). The body welding portions 91 can firmly couple the inner surface of the internal terminal body 81 and the bare cell 2 through welding. Accordingly, in the energy storage device 1 according to the present invention, by using the body welding portion 91, it is possible to improve the stability of electrical connection between the internal terminal 8 and the bare cell 2. The body welding portions 91 may couple any one of the first electrode 21 and the second electrode 22 of the bare cell 2 to the inner surface of the internal terminal body 81. The body welding portions 91 may be spaced apart from each other in a circumferential direction based on a center of the internal terminal body 81.

Each of the internal terminals 8 may include a plurality of coupling members 82.

The coupling members 82 are connected to the bare cell 2. The coupling members 82 may protrude toward the bare cell 2 from the inner surface of the internal terminal body 81. Thus, when the internal terminal 8 and the bare cell 2 are coupled, the coupling members 82 press the bare cell 2. Accordingly, in the energy storage device 1 according to the present invention, by using the coupling members 82, it is possible to increase a connecting force between the internal terminal 8 and the bare cell 2. The coupling members 82 may press any one of the first electrode 21 and the second electrode 22 of the bare cell 2.

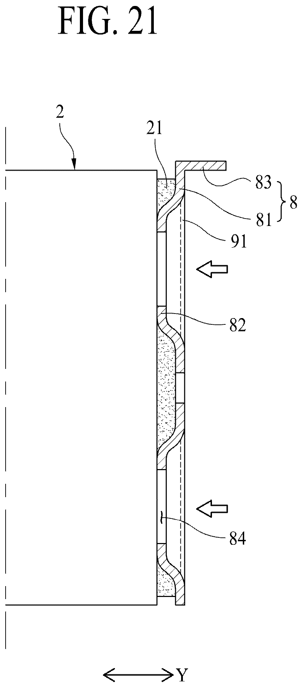

The coupling members 82 and the body welding portion 91 may be disposed at positions spaced apart from each other. When the coupling members 82 are spaced apart from each other in the circumferential direction based on the center of the internal terminal body 81, the body welding portions 91 may be disposed between the coupling members 82 in the circumferential direction based on the center of the internal terminal body 81. For example, as shown in FIG. 20, the plurality of coupling members 82 and the plurality of body welding portions 91 may be alternately disposed in the circumferential direction based on the center of the internal terminal body 81. Thus, the body welding portions 91 may be disposed at portions of the internal terminal body 81 which do not protrude toward the bare cell 2. Accordingly, the energy storage device 1 according to the present invention is implemented to increase a separation distance between a connection position at which the coupling members 82 are connected to the bare cell 2 and a welding position (indicated by a dotted line in FIG. 21) at which the body welding portions 91 couple the inner surface of the internal terminal body 81 and the bare cell 2 through welding. Accordingly, in the energy storage device 1 according to the present invention, it is possible to prevent a short circuit or the like from occurring in the bare cell 2 in a process of coupling the inner surface of the internal terminal body 81 and the bare cell 2 through welding. Meanwhile, the body welding portion 91 may be formed by welding being performed on an outer surface of the internal terminal body 81 as indicated by an arrow in FIG. 21.

Each of the internal terminals 8 may include a terminal protrusion member 83.

The terminal protrusion member 83 protrudes from the internal terminal body 81. The terminal protrusion member 83 may be in contact with the upper protrusion member 62 of the bus bar 6 to be supported by the bus bar 6. Accordingly, the internal terminal 8 can be firmly supported by the bus bar 6 and thus can be stably maintained in a state of being electrically connected to each of the bare cell 2 and the bus bar 6. In this case, the upper protrusion member 62 may be supported on the upper support surface 373 of the support member 37. The terminal protrusion member 83 may protrude toward the sidewall member 33 from an upper portion of the internal terminal body 81. The terminal protrusion member 83 and the internal terminal body 81 may be integrally formed.

The terminal protrusion member 83 and the upper protrusion member 62 may be coupled through an upper welding portion 92 (shown in FIG. 19). The upper welding portion 92 can firmly couple the terminal protrusion member 83 and the upper protrusion member 62 through welding. Thus, in the energy storage device 1 according to the present invention, by using the upper welding portion 92, it is possible to further improve the stability of electrical connection between the internal terminal 8 and the bus bar 6. Accordingly, in the energy storage device 1 according to the present invention, vertical welding between the internal terminal 8 and the bus bar 6 is possible using the terminal protrusion member 83 and the upper protrusion member 62, thereby improving the ease of a welding operation. Accordingly, since the energy storage device 1 according to the present invention includes a plurality of upper welding portions 92, the internal terminals 8 and each of the bus bars 6 can be coupled through welding.

Each of the internal terminals 8 may include a plurality of impregnation holes 84.

The impregnation holes 84 may be formed to pass through the internal terminal body 81. The impregnation holes 84 may be used as paths for impregnating the bare cells 2 with an electrolyte. Accordingly, the energy storage device 1 according to the present invention is implemented such that, in a state in which the internal terminals 8 are coupled to the bare cells 2, an impregnation operation of impregnating the bare cells 2 with an electrolyte may be performed through the impregnation holes 84. Accordingly, in the energy storage device 1 according to the present invention, it is possible to improve the ease of the impregnation operation.

The impregnation holes 84 may be formed to pass through each of the coupling members 82. In this case, the impregnation holes 84 may be spaced apart from each other in a circumferential direction based on the center of the internal terminal body 81. Any one of the impregnation holes 84 may be formed to pass through the center of the internal terminal body 81.

It will be apparent to those skilled in the art to which the present invention belongs that the present invention is not limited to the above-described embodiments or the accompanying drawings, and various substitutions, modifications, and variations can be made without departing from the spirit or scope of the present invention.

**Claims**

1. An energy storage device comprising:

   a module case in which a plurality of accommodation spaces are formed;
   a plurality of bare cells each accommodated in one of the accommodation spaces; and
   a cover coupled to the module case to cover the accommodation spaces,
   wherein:

   the module case is in direct contact with the bare cells each accommodated in one of the accommodation spaces to support the bare cells; and
   for each of the accommodation spaces, a pressure absorption ratio, which is calculated as a ratio of a volume of the bare cell to a volume of the accommodation space, is 95% or less.

2. The energy storage device of claim 1, wherein the pressure absorption ratio is 50% or more.

3. The energy storage device of claim 1, wherein:

   the module case and the cover are formed of a plastic material and coupled to each other; and
   pressure resistance strength for each of the accommodation spaces is determined according to the pressure absorption ratio of each of the accommodation spaces.

4. The energy storage device of claim 3, wherein the module case and the cover are formed using polyamide.

5. The energy storage device of claim 1, wherein:

   the module case and the cover are coupled through welding using a laser; and
   the module case is formed to have a lower transmittance of the laser than the cover.

6. The energy storage device of claim 1, wherein:

   the module case includes a bottom member disposed below the bare cells accommodated in the accommodation spaces, and a plurality of holding members protruding upward from the bottom member in each of the accommodation spaces; and
   the holding members support the bare cell such that the bare cell is disposed at a position spaced apart from the bottom member.

7. The energy storage device of claim 6, wherein:

each of the holding members includes a holding groove into which the bare cell is inserted, and a holding surface in contact with the bare cell inserted into the holding groove; and
each of the holding surfaces is formed to constitute a curved surface corresponding to a circumference of the bare cell.

8. The energy storage device of claim 6, wherein:

the accommodation spaces are spaced apart from each other in a first axial direction in the module case; and
the holding members are spaced apart from each other in a second axial direction perpendicular to the first axial direction in each of the accommodation spaces.

9. The energy storage device of claim 6, wherein:

the cover includes a cover member configured to cover the accommodation spaces, and a plurality of separation members protruding from the cover member; and
the separation members are inserted into the accommodation spaces when the cover and the module case are coupled and support the bare cells such that the bare cells are disposed at positions spaced apart from the cover member in the accommodation spaces.

10. The energy storage device of claim 9, wherein:

each of the separation members includes a separation groove into which the bare cell is inserted, and a separation surface in contact with the bare cell inserted into the separation groove; and
each of the separation surfaces is formed to constitute a curved surface corresponding to a circumference of the bare cell.

11. The energy storage device of claim 10, wherein:

the accommodation spaces are spaced apart from each other in a first axial direction in the module case; and
the plurality of separation members are inserted into each of the accommodation spaces and are spaced apart from each other in a second axial direction perpendicular to the first axial direction.

12. The energy storage device of claim 11, wherein:

the cover includes a plurality of connection members inserted into the accommodation spaces; and
each of the connection members is coupled to the separation members spaced apart from each other in the second axial direction.

13. The energy storage device of claim 1, wherein the module case includes:

a bottom member disposed below the bare cells accommodated in the accommodation spaces;
a plurality of sidewall members protruding upward from an outer surface of the bottom member; and
one or more partition members which protrude upward from the bottom member between the sidewall members and partition the accommodation spaces.

14. The energy storage device of claim 13, comprising a welding joint configured to couple the module case and the cover,

wherein the welding joint includes a sidewall coupling member configured to couple the sidewall members and the cover, and a partition coupling member configured to couple the partition member and the cover.

15. The energy storage device of claim 14, wherein the sidewall coupling member and the partition coupling member are connected to each other to constitute a closed loop for each of the accommodation spaces.

16. The energy storage device of claim 13, wherein the module case includes a flange protruding outward from upper portions of the sidewall members.

17. The energy storage device of claim 16, comprising a welding joint configured to couple the module case and the cover,

wherein:

the welding joint includes a sidewall coupling member configured to couple the sidewall members and the cover; and
the sidewall coupling member configured to couple upper surfaces of the sidewall members and a lower surface of the cover at a position closer to inner surfaces of the sidewall members than an outer surface of the flange.

18. The energy storage device of claim 17, wherein:

a fastening hole is formed in each of the flange and the cover; and
the fastening hole formed in the flange is disposed outside the sidewall coupling member.

19. The energy storage device of claim 13, comprising a plurality of bus bars configured to electrically connect at least two bare cells among the bare cells,
wherein:

the module case includes a plurality of support members protruding upward from the bottom member in each of the accommodation spaces; and
each of the support members supports the bus bar.

20. The energy storage device of claim 19, wherein each of the support members includes:

an inner support surface disposed to face the bare cell accommodated in the accommodation space;
an outer support surface disposed to face the sidewall member at a position spaced apart from the sidewall member; and
an upper support surface connected to each of the inner support surface and the outer support surface.

21. The energy storage device of claim 20, wherein:

each of the support members includes a support groove formed on the outer support surface; and
the support groove is formed such that a size thereof is gradually increased as the support groove extends upward.

22. The energy storage device of claim 20, wherein:

each of the bus bars includes a bus bar body in contact with the inner support surface, and an upper protrusion member protruding from the bus bar body; and
the upper protrusion member is in contact with the upper support surface and thus supported by the support member.

23. The energy storage device of claim 19, wherein:

the accommodation spaces are spaced apart from each other in a first axial direction in the module case; and
each of the support members is formed to have the same length as the accommodation space based on the first axial direction.

24. The energy storage device of claim 1, comprising a plurality of bus bars configured to electrically connect at least two bare cells among the bare cells,
wherein:

each of the bus bars includes a bus bar body disposed between the bare cell accommodated in the accommodation space and a sidewall member of the module case, and a detection member protruding from the bus bar body; and
the module case includes a bottom member disposed below the bare cells accommodated in the accommodation spaces, and a detection hole formed to pass through the bottom member such that electrical connection is externally allowed to the detection member.

25. The energy storage device of claim 24, wherein each of the bus bars includes an insertion hole formed to pass through the detection member and is coupled to the module case such that the insertion hole is disposed at a position corresponding to the detection hole.

26. The energy storage device of claim 24, wherein:

the bare cells are spaced apart from each other in a first axial direction and accommodated in different accommodation spaces, respectively;
each of the bus bars includes a lower protrusion member protruding from the bus bar body; and
the lower protrusion member and the detection member protrude in opposite directions with respect to each other based on a second axial direction perpendicular to the first axial direction.

27. The energy storage device of claim 24, wherein:

among the bus bars, a first bus bar is electrically connected to a first bare cell and a second bare cell among the bare cells;
the first bare cell and the second bare cell are spaced apart from each other in a first axial direction and accommodated in different accommodation spaces, respectively; and
a first detection member of the first bus bar is disposed between the first bare cell and the second bare cell based on the first axial direction.

28. The energy storage device of claim 27, comprising an external terminal electrically connected to the first bare cell, wherein:

the first bare cell has one side electrically connected to the first bus bar and the other side electrically connected to the external terminal; and
the external terminal includes a lead member protruding outward from the module case.

29. The energy storage device of claim 1, comprising:

a plurality of internal terminals to be connected to each of the bare cells: and
a plurality of bus bars to be connected to the internal terminals,
wherein:

each of the internal terminals includes an internal terminal body disposed between the bare cell and the bus bar; and
each of the bus bars includes a bus bar body to be connected to the internal terminal body.

30. The energy storage device of claim 29, comprising a plurality of body welding portions configured to couple an inner surface of each of the internal terminal bodies and the bare cell, wherein:

each of the internal terminals includes a plurality of coupling members which protrude from the inner surface of the internal terminal body toward the bare cell and are connected to the bare cell; and
the body welding portions are disposed at positions spaced apart from the coupling members.

31. The energy storage device of claim 29, comprising upper welding portions configured to couple the internal terminals and the bus bars, wherein:

each of the internal terminals includes a terminal protrusion member protruding from the internal terminal body; and
each of the bus bars includes an upper protrusion member protruding from the bus bar body; and
each of the upper welding portions couples the terminal protrusion member and the upper protrusion member through welding.

32. The energy storage device of claim 29, wherein:

each of the internal terminals includes a plurality of impregnation holes formed to pass through the internal terminal body, and a plurality of coupling members protruding toward the bare cell from the inner surface of the internal terminal body and connected to the bare cell; and
the impregnation hole is formed in each of the coupling members.

# FIG. 1

# FIG. 2

# FIG. 3

# FIG. 4

2

212
21 {
211

221
22
222

23

# FIG. 5

1

2    4

V1   V2
31
34   32   33   36
3

X

# FIG. 6

# FIG. 7

# FIG. 8

# FIG. 9

# FIG. 10

# FIG. 11

# FIG. 12

# FIG. 13

# FIG. 14

# FIG. 15

# FIG. 16

# FIG. 17

# FIG. 18

# FIG. 19

# FIG. 20

# FIG. 21

## INTERNATIONAL SEARCH REPORT

| International application No. |
| --- |
| **PCT/KR2022/005853** |

**A. CLASSIFICATION OF SUBJECT MATTER**

**H01G 2/10**(2006.01)i; **H01G 11/78**(2013.01)i

According to International Patent Classification (IPC) or to both national classification and IPC

**B. FIELDS SEARCHED**

Minimum documentation searched (classification system followed by classification symbols)

H01G 2/10(2006.01); B29C 45/14(2006.01); H01G 11/08(2013.01); H01G 11/10(2013.01); H01G 11/14(2013.01); H01M 10/04(2006.01); H01M 2/00(2006.01); H01M 2/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수용공간(accommodation space), 모듈케이스(module case), 베어셀(bare cell), 커버(cover), 부피(volume), 비율(ratio)

**C. DOCUMENTS CONSIDERED TO BE RELEVANT**

| Category* | Citation of document, with indication, where appropriate, of the relevant passages | Relevant to claim No. |
| --- | --- | --- |
| X | US 2013-0143074 A1 (KIM, Yeungki) 06 June 2013 (2013-06-06)<br>See paragraphs [0039]-[0046]; and figures 1A-1B and 2-3. | 1-4,6-11,13 |
| Y | | 5,12,14-19,23 |
| A | | 20-22,24-32 |
| Y | KR 10-2017-0089226 A (LS MTRON LTD.) 03 August 2017 (2017-08-03)<br>See paragraphs [0026]-[0112]; and figures 3-12. | 5,14-18 |
| Y | US 2020-0099022 A1 (MILWAUKEE ELECTRIC TOOL CORPORATION) 26 March 2020 (2020-03-26)<br>See paragraph [0067]; and figures 20-25. | 12 |
| Y | KR 10-2016-0147200 A (LS MTRON LTD.) 22 December 2016 (2016-12-22)<br>See paragraphs [0043]-[0075]; and figure 2. | 19,23 |

✓ Further documents are listed in the continuation of Box C.    ✓ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 August 2022** | **10 August 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2022/005853**

**C.      DOCUMENTS CONSIDERED TO BE RELEVANT**

| Category* | Citation of document, with indication, where appropriate, of the relevant passages | Relevant to claim No. |
|---|---|---|
| A | KR 10-2016-0100577 A (LG CHEM, LTD.) 24 August 2016 (2016-08-24)<br>See paragraphs [0095]-[0126]; and figures 1-8. | 1-32 |

<div align="center">

**INTERNATIONAL SEARCH REPORT**
**Information on patent family members**

</div>

| International application No. |
|---|
| **PCT/KR2022/005853** |

| Patent document cited in search report | | | Publication date (day/month/year) | Patent family member(s) | | | Publication date (day/month/year) |
|---|---|---|---|---|---|---|---|
| US | 2013-0143074 | A1 | 06 June 2013 | KR 10-2013-0062197 | | A | 12 June 2013 |
| KR | 10-2017-0089226 | A | 03 August 2017 | KR | 10-2377313 | B1 | 21 March 2022 |
| US | 2020-0099022 | A1 | 26 March 2020 | US | 11145932 | B2 | 12 October 2021 |
| | | | | US | 2022-0013847 | A1 | 13 January 2022 |
| KR | 10-2016-0147200 | A | 22 December 2016 | KR | 10-2159127 | B1 | 24 September 2020 |
| KR | 10-2016-0100577 | A | 24 August 2016 | KR | 10-1750382 | B1 | 23 June 2017 |

Form PCT/ISA/210 (patent family annex) (July 2019)